# EUROPEAN PATENT APPLICATION

(11) **EP 2 660 219 A1**
(43) Date of publication of application: **06.11.2013**
(21) Application number: 11853232.4
(22) Date of filing: 21.06.2011
(51) Int. Cl.: C04B 33/135

(54) **METHOD FOR PRODUCING A CERAMIC PRODUCT USING FLY ASH AS A RAW MATERIAL**

(30) Priority: 31.12.2010 ES 201032019 P
(71) Applicant: Bou Cortés, María Lidón, 12110 ALCORA (Castellón) (ES); Vujic, Dura, Novi Sad (RS); Sremac, Sinisa, 21000 Novi Sad (YU)
(72) Inventor: Bou Cortés, María Lidón, 12110 ALCORA (Castellón) (ES); Vujic, Dura, Novi Sad (RS); Sremac, Sinisa, 21000 Novi Sad (YU)
(74) Representative: Ungria López, Javier
(86) International application number: PCT/ES2011/070449
(87) International publication number: WO 2012/089875

(57) **Abstract**

The invention relates to a method for obtaining a clay product from fly ash, characterized in that it comprises at least the steps of: obtaining a mixture of clay and fly ash, with a percentage of ash equal to or lower than 50 wt.-% or equal to or lower than 75 vol.-% of the end product; adding phosphoric acid and grinding the mixture; and adding hydrated sodium silicate (Na₂O)ₙ(SiO₂)ₘ(H₂O) and grinding the mixture. The invention also relates to a process for manufacturing ceramic materials using the aforementioned clay product as a raw material, and to the resulting clay product and ceramic material. In addition, the invention relates to the use of fly ash in order to obtain a clay product and to the use of said product in the manufacture of ceramic materials.

## Description

### TECHNICAL FIELD OF THE INVENTION

The present invention is encompassed within the field of the manufacture of clay-based products, preferably clay materials manufactured by extrusion or pressing, which are usually applied in the construction industry.

According to the International Patent Classification - IPC - the corresponding code is C04B.

### BACKGROUND OF THE INVENTION

The process of elaborating ceramic materials from clay and other raw materials is broadly known in the field of construction. Among these raw materials, ash or fly ash have been used for decades as a construction material, initially in the production of cement and later, in obtaining ceramic products as indicated above. Fly ash is one type of waste generated during combustion, and comprises fine particles. If these fine particles are raised together with the combustion gases, they are expelled by chimneys, whereas if they do not raise, they are defined as bottom ash.

The composition of fly ash varies considerably, but all of them include considerable amounts of silicon dioxide (amorphous and crystalline), and calcium oxide. The following are among the toxic components that may be contained in fly ash: arsenic, beryllium, boron, cadmium, chromium, chromium VI, cobalt, lead, manganese, mercury, molybdenum, selenium, strontium, and vanadium, along with dioxins and PAH compounds.

The greatest amount of fly ash comes from the combustion of coal in power plants or from the incineration of waste. The majority of countries use oxidative combustion instead of reductive combustion to decrease the emission of carbon dioxide to the atmosphere since 1991 (*Clean Air Act*)*.* This combustion method generates ash with a very high carbonate content (approximately 50% by weight of the ash is carbonates), which prevents its use in the construction industry. This happens because the firing of ceramic products is carried out at a temperature above 900 °C, which causes the decomposition of said carbonates into a toxic gas (CO₂). In addition, these carbonates constitute more than 60% by weight of the fly ash (*1991 Clean Air Act reduction flame burners),* due to which, in normal manufacturing conditions of a ceramic product, normal manufacturing conditions understood as subjecting the starting material with ash to a thermal treatment at temperatures above 900 °C without using the method or components described herein, the manufactured product suffers a 33% by weight loss with respect to the starting material.

The possibility of using fly ash as a component of a construction material depends on several parameters:
1. Potassium (k) content - the radioactivity associated thereof.
2. Mercury (Hg) content
3. The content of other toxic chemicals if regulated by the law.
4. A continuous control of the aforementioned parameters in fly ash is required.

Fly ash from power plants and from the waste of incinerators fully complies with the requirements of the legislation applicable to the construction sector.

There are examples in the field of the use of fly ash to manufacture ceramic products, such as the one proposed in the international patent application WO 2008/017082, which may be considered the closest to the present invention. Said document describes a method for the preparation of a starting material for the production of clay products, wherein said method comprises the addition of an inert material to which sodium silicate, and subsequently, phosphoric acid, have been added. Optionally, said method comprises the use of fly ash or other industrial waste as dry inert material.

Taking into account the previous mentioned, the main objective of the present invention is to improve other methods already known in the state of the art, and to provide the following solutions to the technical problems detected in the field:
- storing and eliminating ash with high carbonate content in a permanent, safe, and therefore, environmentally-friendly manner;
- using ash as raw material in the production of construction materials;
- reducing the density and weight of ceramic products using ash; and
- improving the thermal properties of ceramic products using ash.

Finally, the present invention is applicable to any industrial field implying the production of ceramic materials or clay with advantageous properties with respect to other similar materials, which may also be conceived as a safe and environmentally-friendly method to store and eliminate industrial waste such as fly ash.

### DESCRIPTION OF THE INVENTION

### General Description

The main object of the present invention is a method to obtain a clay product (or an aqueous clay paste) from fly ash, such that said ash is eliminated from the environment permanently, safely, and at no cost.

The fly ash must fulfill two criteria for this method to be carried out: it must contain carbon and its radioactivity must be within the intervals defined by the law.

Clay product or aqueous clay paste is understood as the one comprising aluminosilicate aggregates (clay) in its composition, obtained from the decomposition of aluminum minerals, and which shall likely and conveniently present the form of an aqueous clay paste (slip). Said clay product or aqueous clay paste may in turn be used as raw material to obtain other products, such as ceramic materials, for example those commonly used in the construction sector (shingles, tiles, etc.). It is understood that said ceramic materials start from the aforementioned clay product, which is transformed or formed in an industrial process, until the final production of the ceramic material.

More specifically, the method to manufacture the clay product or aqueous clay paste comprises obtaining a mixture of clay and fly ash to which phosphoric acid (H₃PO₄) and hydrated sodium silicate [(Na₂O)ₙ(SiO₂)ₘ(H₂O)ₖ] (also commonly referred to as water glass), are added.

The addition of phosphoric acid and hydrated sodium silicate to the mixture of clay and fly ash produces the following reactions:
- CaCO₃ + H₃PO₄ → CO₂ + primary, secondary, or tertiary calcium phosphates.
- Primaries and secondaries → polyphosphates (by heating)
- Polyphosphates → calcium silicates: CS, C₂S, and C₃S (by heating hydrated SiO₂)

These two additives, the hydrated sodium silicate and phosphoric acid, when the clay product is used as raw material for the manufacture of ceramic materials by extrusion, smelting, or pressing, cause the formation of polysilicates that allow carrying out the firing step of said ceramic material during the process at below 900 °C. The formation of said additional polysilicates is due to the decomposition of CaCO₃ (and similar carbonates), due to the addition of phosphoric acid (H₃PO₄) to a mixture of clay and ash. This process leads to the formation of different calcium phosphates.

The addition of hydrated sodium silicate or water glass [(Na₂O)ₙ(SiO₂)ₘ(H₂O)ₖ] is carried out to bind said hydrated sodium silicate to the easily accessible calcium ions coming from the phosphate and the fly ash during the firing of the ceramic material (at temperatures above 200 °C). This way, when the clay product is fired in the presence of hydrated SiO₂, different calcium silicates are formed: CS, C₂S, and C₃S. These calcium silicates, formed at temperatures comprised between 200 °C and 840 °C, produce a reduction in the firing temperature of the clay product to or below 850 °C. The temperature drop prevents the decomposition of carbonates, which supposes an advantage with respect to other processes known to date.

The present invention also encompasses a manufacturing method of a ceramic material from the already prepared clay product or aqueous clay paste, obtainable by means of the aforementioned process, and comprises:
- drying the clay product; and
- molding by extrusion and firing the clay product obtained in the previous step.

This application refers to the clay product or aqueous clay paste obtainable by means of the method in question, and to the ceramic material obtainable from said clay product when used as raw material in the manufacturing process by extrusion or pressing. In fact, it has been observed that ceramic materials obtainable from the clay product have better thermal insulation properties than those obtained in normal conditions.

Finally, the invention also comprises the use of fly ash as raw material for the manufacture of clay products or aqueous clay pastes according to the method of interest. Fly ash reduces the specific weight of the end product and allows obtaining better results in terms of thermal insulation.

### Detailed Description

The present invention relates, in the first place, to a method to obtain a clay product or aqueous clay paste from fly ash, characterized in that it comprises at least the following steps:
- obtaining a mixture of clay and fly ash, with an ash percentage equal to or lower than 50% by weight, or equal to or lower than 75% by volume of the end product; and
- adjusting the mixture of clay and fly ash by means of the incorporation of the following additives in two sub-steps:
   ○ first, adding phosphoric acid and grinding the mixture; and
   ○ second, adding hydrated sodium silicate [(Na₂O)ₙ(SiO₂)ₘ(H₂O)ₖ] and grinding the end mixture.

Preferably, the additives are presented in the form of an aqueous solution.

The clay to ash ratio (w/w) in the first mixture depends on the desired final density for the clay product, or as applicable, of the end material that can be manufactured from said clay product (that is to say, when it is used as raw material in the manufacture of another material). Preferably, if the starting clay does not contain carbonates, or if its plasticity were unfavorable for known manufacturing processes of ceramic materials, such as extrusion, then the most convenient course of action would be for the mixture to have 50% by weight of fly ash of the end product, the clay to fly ash ratio then being 1:1.

The best results are obtained by mixing the fly ash and the clay in the first feeder of the production plant, regardless of the preparation method of the mixture (dry grinding or crushing the clay by means of a water mill), given that the maximum homogeneity is obtained in this manner.

It is convenient, although preferred, that a period of time, which may broadly vary from at least one minute to several hours, elapses between the grinding of the mixture of clay and fly ash with phosphoric acid and the addition of the hydrated sodium silicate; when produced at an industrial level, the ground clay is allowed to stand, preferably for at least 24 hours, to balance the water content and for the mixture to become homogenous.

The method to obtain the described clay product is preferably characterized in that water is added when the content thereof (i.e., the humidity level) of the mixture of clay and fly ash is lower than 18%, that is to say, when the water content is deemed to be too low to mix all the components in an appropriate manner. This is due to the fact that, to carry out the extrusion process appropriately, the mixture of clay and other materials, such as fly ash, must have a humidity level of at least 18%, and preferably between 18% and 22%. Next, two variants are proposed when this condition is fulfilled.

In a preferred embodiment, a suspension of clay, fly ash, and water is first prepared, preferably by means of wet grinding, prior to mixing the clay and the fly ash with the phosphoric acid, when the water content of the mixture of starting clay and fly ash is below 18%; that is to say, the water is directly added to the initial mixture of clay and fly ash. More preferably, the wet grinding is carried out by using at least one ball mill. Also preferably, the clay to water ratio used in the suspension is comprised between 100:40 and 100:70, and more preferably, 100:62. In addition, at least one deflocculant may be used in the preparation of the suspension of clay, fly ash, and water. The amount of deflocculant depends on the type of starting clay. For example, when the deflocculant is preferably sodium tripolyphosphate, the ratio with the rest of the components is comprised between 0.18% and 0.32%, including both limits.

In another preferred embodiment, when the water content of the mixture of clay and fly ash is below 18%, the phosphoric acid is mixed with one part of water prior to being mixed with the clay and fly ash, and the hydrated sodium silicate is mixed with the other part of water prior to being added to the previous mixture; that is to say, the water needed to hydrate the starting clay and fly ash is not directly added thereof, but in parts and mixed with the additives, which are soluble. The preparation of the suspensions of the two additives with water prior to being added to the initial mixture of clay and fly ash allows to obtain a more homogenous end mixture of the components, when the mixture of clay-ash presents the aforementioned water content (below 18%), due to the fact that a small amount by weight of the additives is being used. Finally, in this embodiment, the method comprises the following steps:
- preparing a suspension comprising one part of water and phosphoric acid (H₃PO₄),
- adding said suspension to the initial mixture of clay and fly ash, and grinding; and
- adding a second suspension comprising another part of water and the hydrated sodium silicate [(Na₂O)ₙ(SiO₂)ₘ(H₂O)ₖ] to said mixture, and grinding.

It should be understood that the two parts of water being added to the clay and fly ash in two different suspensions, amount to the total (100%) amount of water to be added.

However, when the water content (or humidity level) of the mixture of clay and fly ash is equal to or higher than 18%, water does not need to be added to the mixture. In this case, the phosphoric acid is directly added to the initial mixture of clay and fly ash to form a mixture, preferably by pulverizing or sprinkling in small drops, and the hydrated sodium silicate is also added directly to the previous mixture, preferably by pulverizing or sprinkling.

In any of the aforementioned embodiments, the starting clay preferably presents a carbonates content by weight of at least 3%. If the selected starting clay presents a low carbonates percentage, generally below 3% by weight, then they can be added by means of an additional initial step of adding carbonates, preferably by mixing the starting clay with another carbonate-rich clay, more preferably limestone (CaCO₃), or another similar carbonate-rich material.

The clay can be preferably mixed with other inert materials other than fly ash, preferably such as sand or finely divided scraps from other manufacturing processes of ceramic materials (broken bricks, etc.).

In any of the variants exposed for the developed method, after the grinding of the end mixture, the obtained clay product is preferably left to stand. Also preferably, the phosphoric acid is added to the mixture of clay and ash slowly, rather than all at once, the addition being preferably carried out between 1 and 5 minutes, including both limits; for example, in 4 minutes. Optionally, the addition is carried out by dripping or spraying. The kneading of clay/ash and phosphoric acid, whether said acid is on its own or in a suspension with a part of water, can last between 5 and 20 minutes, preferably 10 minutes.

In any of the embodiments contemplated for this method, the phosphoric acid (H₃PO₄) used in the procedure can consist of industrial-grade phosphoric acid, with a concentration of 75% by volume, and preferably added in a phosphoric acid to ash ratio of at least 1:50 by weight, being more preferably comprised between 1:50 and 1:200, and even more preferably being 1:100. For example, in the case of a mixture of 700 kg of clay and 300 kg of fly ash, 3 kg of acid are needed. This ratio can be increased if the hardness of the ceramic material manufactured from the clay product prepared with this method is desired to be increased.

Preferably, the by weight ratio of the phosphoric acid and hydrated sodium silicate solution is comprised between 1:1 (w/w) and 1:5 (w/w), a ratio of 1:3 (w/w) being especially preferred.

Preferably, the SiO₂ content in the hydrated sodium silicate is approximately 30% by weight; and the SiO₂/Na₂O ratio in the hydrated sodium silicate [(Na₂O)ₙ(SiO₂)ₘ(H₂O)ₖ] is at least 3.0 w/w, or the highest available. This way, even though the SiO₂ percentage used is preferably the highest possible, said percentage is not limitative, given that any industrially available percentage may be used. In fact, the by weight ratio of 1:3 described between the phosphoric acid and the hydrated sodium silicate, the most favorable for the invention, allows to obtain the best results when the sodium silicate presents a Na₂O and SiO₂ ratio of specifically 3.00.

In a particular embodiment of the invention, when the SiO₂/Na₂O ratio in the hydrated sodium silicate is 3.00 w/w, and the phosphoric acid is industrial grade with a concentration of 75% by volume, then the most favorable by weight ratio of the phosphoric acid and hydrated sodium silicate solution is 1:3 (w/w). If the mixture of clay and ash is 50%, calculated for a phosphoric acid/ash ratio of at least 1:100 by weight, 3 kg of hydrated sodium silicate for each 100 kg of fly ash should be added.

The addition of the phosphoric acid and the hydrated sodium silicate must always be carried out separately and in the order indicated, never simultaneously. This is the main difference with the method described in the international patent application W02008/017082, where an inverse adding order for the additives is proposed, that is to say, first adding the sodium silicate and then the phosphoric acid. The purpose of adding the phosphoric acid first is for this compound to react with the carbonates, mainly with the calcium carbonate, and to generate a (soluble) compound with the calcium ions available. The aqueous solution of phosphoric acid reacts with the carbonates contained in the clay and produces different phosphates (primary, secondary, or tertiary). Said phosphates lead to appropriate polyphosphates for their heating in processes to obtain ceramic materials.

Adding phosphoric acid to the mixture of clay and water decreases the pH to a value below 7 (pH<7), causing the separation of carbon dioxide from the carbonates present in the clay.

On the other hand, the hydrated sodium silicate or water glass plays a double role in the process. On the one hand, it changes the viscosity of the clay in the mixture, which allows said paste to cross the extruder at the same pressure when the aqueous clay paste is used in the manufacture of ceramic materials by extrusion or pressing. On the other hand, the increase of the temperature in the firing step or during the heating of the green product for the production of ceramic materials causes the polyphosphoric anions be bound to the mixture of clay, and the calcium ions to the sodium silicate. These reactions favor the formation of calcium silicates, which actually increase the hardness of the ceramic material and also reduce the retention of water in the raw material.

Another object of the present invention is the clay product or aqueous clay paste obtainable by means of the previous method. Said prepared clay product is ready to manufacture ceramic materials, and can be preserved permanently prior to carrying out the manufacturing process of said materials.

Therefore, the present invention also relates to a process for the manufacture of ceramic materials by extrusion from the clay product prepared with the aforementioned method, in any of its variants, used herein as raw material, characterized in that it comprises at least the following steps:
- drying the clay product; and
- molding by extrusion and firing the clay product obtained in the previous step, carrying out the firing at a temperature below 900 °C, more preferably, equal to or lower than 850 °C.

Optionally, carrying out the firing of the dry, molded clay product in several heating steps is more advisable.

Conditioning the dried clay product (that is to say, after the drying step) to obtain an appropriate molding and firing process, is preferable. Said conditioning can be carried out by crushing the dry clay product, by grinding, or both. More preferably, the dry clay product is crushed (for example, in a jaw crusher), and is ground (for example, in a rolling mill with a 2 mm separation between rollers), until a powder with the appropriate granulometry is obtained.

On the other hand, the drying is preferably carried out at a temperature comprised between 100 °C and 120 °C for a period of time comprised between 12 and 36 hours, and more preferably, the clay product is dried at 100 °C for 24 hours. Preferably, the product is dried in a furnace.

In order to mold the clay product by extrusion, the same can be moistened prior to the pressing by extrusion.

In the most preferred embodiment among all the embodiments exposed above for this method of manufacturing ceramic materials, the clay product is obtained immediately prior to being subject to the step of drying and molding by extrusion. It is important not to let a lot of time pass, because after a few minutes (few minutes, preferably less than 5 and preferably no more than 1), the clay product quickly starts to lose water and to harden. This is why the hydrated sodium silicate, the last additive of the mixture, is preferably added directly in the extruder machine, where direct contact with air is avoided and the humidity of the clay during the extrusion process is maintained. More preferably, the hydrated sodium silicate is added to the mixture of clay and fly ash with phosphoric acid and is ground with the other components of the paste directly in the double-shaft mixer of the extruder.

Thanks to the starting product used in this extrusion process to an important extent, we are able to reduce not only the temperature necessary to dry the formed ceramic material, but also to carry out the firing step at a lower temperature than the one usually required, even 100 °C below the same (above 900 °C), with the subsequent energy savings, which in turn leads to the inhibition of the decomposition of the carbonates present in the fly ash as CO₂, given that the material is fired at a temperature below 900 °C. This way, the sintering of the components of the clay product is completed at a temperature below 850 °C, that is to say, 100 °C below the usually required temperature due to the polymerization of the calcium silicate, without decomposing the calcium carbonates that did not react and remain in the clay.

Likewise, the decrease of the melting point of the Ca₃(PO₄)₂ is achieved thanks to the SiO₂ as a result of the dehydration of the sodium silicate [(Na₂O)ₙ(SiO₂)ₘ(H₂O)ₖ].

Thanks to the previously prepared clay product, the drying step in the manufacture of the ceramic material is shorter then usual; depending on the drying device being used, the time can be 1/3 or even 1/2 shorter than usual. The water content in the clay depends on the temperature, such that the water present in the intermediate layers of the clay is lost when the clay is exposed to temperatures comprised between 100 °C and 250 °C. The dehydroxylation then begins at a temperature of 300 °C-400 °C; the process is subsequently accelerated and ends at a temperature of 500 °C-600 °C.

The present specification also includes the ceramic material obtainable from the manufacturing process described herein, in which the clay product prepared with clay, fly ash, phosphoric acid, and hydrated sodium silicate is used according to the aforementioned indications.

Finally, the invention also relates to the use of fly ash as raw material to obtain clay products according to the method contained in this specification.

In addition, the ash and the additives used to obtain the clay product have a positive effect in terms of plasticity and hardening of the ceramic material in its manufacturing process, more specifically, during drying. Dry ceramic materials present 25% more resistance to breakage. In addition, the chemical bonds in an early firing step create a polymeric structure of clay sodium silicate. The phosphoric acid, when transformed into polyphosphoric acid, allows obtaining a mass with the present cations that is completely sintered at a temperature of 850 °C.

### DESCRIPTION OF THE FIGURES

**Figure 1****.** Bigot curve for samples 1 and 2 of Example 1.
**Figure 2****.** Normal heating curve of the company PICHLER ZIEGELWERKS (Wels, Austria), of Example 4.
**Figure 3****.** Image of a ceramic material obtained according to Example 4 (24-hour drying, firing at 840 °C), presenting a 20% content of fly ash and prepared with the additives according to the present invention.
**Figure 4****.** Image of a conventional ceramic material, without additives and fired at 950 °C.

### EXAMPLES OF AN EMBODIMENT OF THE INVENTION

Next, a preferred embodiment of the invention is described as example with non-limitative character, wherein the preparation of clay products from fly ash, and the manufacture of ceramic materials, is shown.

### Example 1. Selection and characterization of fly ash

Fly ash produced in the OBRENOVAC power plant, in Serbia, due to the burning of lignite, was used. The first sample was collected at the chimneys of the coal incinerators of the plant, while the second sample was collected from the bottom of the furnace.

The first test was to determine the loss on ignition (LOI) with respect to the temperature of the mixtures:

**Table 1. Loss on Ignition (%)**

| Component | 800 °C | 850 °C | 870 °C | 880 °C | 900 °C | 950 °C |
|---|---|---|---|---|---|---|
| Sample 1 | 2.78 | 4.16 | 21.46 | 24.08 | 33.05 | 35.29 |
| Sample 2 | 7.36 | 10.29 | -- | -- | 20.28 | 25.28 |

A significant weight loss was observed after a temperature of 850 °C. The difference between both samples represented in table 2 is due to the combustion of the organic matter present in the fly ash from the bottom of the furnace. This is usually considered unburned coal residue, which may be very useful as energy supplement for the kiln tunnel.

### Example 2. Preparation of a clay product or aqueous clay paste from the fly ash of example 1.

### Laboratory conditions.

The objective is to prove that, regardless of the collection site of the fly ash, chimneys or the bottom of the furnace, the end product will show that the weight loss on ignition is produced within the expected interval, as well as to analyze the use of fly ash in several percentages as inert material to obtain clay products or aqueous clay pastes, with respect to the end properties of the products obtained from the same.

It should be noted that all the measurements indicated in the examples are with respect to weight and not volume. It is known that 1.75 m³ of fly ash are equivalent to 1 T (ton) and 1 m³ of clay (with 5% of humidity, atomized), is equivalent to approximately 1 T.

The present specification explains above which are the most advantageous properties of industrial grade hydrated sodium silicate for the present invention:
- Name: neutral sodium silicate (also liquid silicate, sodium water glass)
- CAS No.: 1344-09-8
- Formula: 3.0·SiO₂·Na₂O
- EINECS No.: 215-687-4

The best is the one with the highest SiO₂/Na₂O ratio = 3.0 ± 10%.

The phosphoric acid used was industrial grade phosphoric acid, with a concentration of 75% v.

### PREPARATION OF SAMPLES:

- Sample 1: "yellow" clay with 30% of fly ash from the bottom of the furnace:
   ○ 36 kg of yellow clay (17-18% water content);
   ○ 15.5 kg of fly ash from the bottom of the furnace.

According to the invention described, 0.1 % of industrial grade phosphoric acid at 75% v., and 0.3% of hydrated sodium silicate with a ratio of both additives of 1:3, calculated with respect to the total content by weight of fly ash, were used.

Therefore, 155 grams of phosphoric acid and 465 grams of hydrated sodium silicate were added to the end mixture of clay and ash.
- Sample 2: "yellow" clay with 50% by weight of fly ash collected from the chimney:
   ○ 29 kg of yellow clay (17-18% water content);
   ○ 29 kg of fly ash from the bottom of the furnace.

According to the invention described, 0.1% of industrial grade phosphoric acid at 75% v., and 0.3% of hydrated sodium silicate with a ratio of both additives of 1:3, calculated with respect to the total content by weight of fly ash, were used.

Therefore, 290 grams of phosphoric acid and 870 grams of hydrated sodium silicate were added to the end mixture of clay and ash.

### RESULTS

The analyses were carried out at the quality lab of the company "Toza Markovic" at Kikinda (Serbia).

**Table 2. Free CaCO₂ Content (%)**

| Sample 1 | Sample 2 |
|---|---|
| 22.00 | 52.75 |

From table 2, we can conclude that the content of free CaCO₂ is extremely high. Normally, this amount avoids the use of fly ash in any known process to obtain clay products.

**Table 3. Atterberg Plasticity Index (%)**

| Sample 1 | Sample 2 |
|---|---|
| 14.6 | 11.1 |

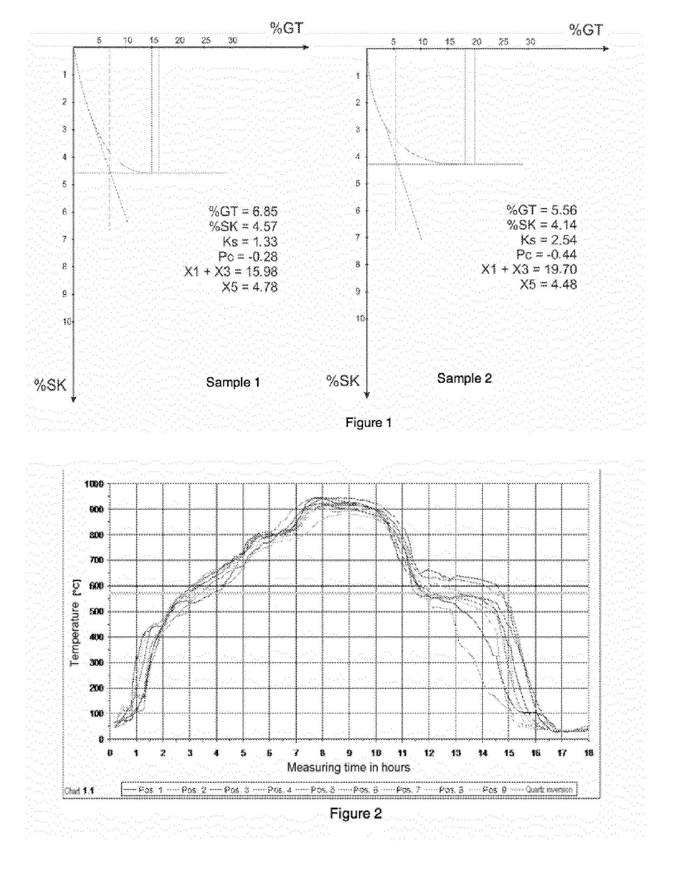

Figure 1 shows the Bigot Curve for each one of the samples 1 and 2.

### Example 3. Preparation of ceramic materials by extrusion according to the present invention, using the ceramic products of example 2. Pre-post drying test.

The samples were taken exactly after of the mixture and extrusion of the ceramic product in a "Morando" vacuum extruder machine.

During the extrusion process, we observe that, even though the plasticity indexes of the samples were different, the entire process was carried out as usual, without a high/additional consumption of energy. The extruded samples were dried in a chamber for 24 hours. This process normally takes 48 hours at a laboratory.

**Table 4. Drying**

| Sample | Reduction due to drying (%) | Loss on drying (%) | Flexural strength (MPa) | Compressive strength (MPa) |
|---|---|---|---|---|
| 1 | 5.02 | 17.11 | 4.57 | 6.87 |
| 2 | 3.24 | 18.27 | 3.53 | 6.64 |

**Table 5. Laboratory Results in a Kiln Furnace**

| Sample* | Heating reduction (%) | Total reduction (%) | Heating loss (%) | Flexural strength during heating (MPa) | Compressive strength during heating (MPa) | Absorption of water during heating (%) | Saturation of heated samples (%) |
|---|---|---|---|---|---|---|---|
| 1 | 0.13 | 5.15 | 5.12 | 3.15 | 8.71 | 14.63 | 16.28 |
| 2 | 0.10 | 3.34 | 6.19 | 2.78 | 6.13 | 18.26 | 22.41 |

| | | | | | | | |
|---|---|---|---|---|---|---|---|
| * Temperature (°C): 850 °C | | | | | | | |

### Example 4. Manufacturing test of ceramic materials at an industrial plant

The pilot tests were carried out at the factory at Wels, Austria (Pichler Ziegelwerk).

The clay was mixed with the fly ash, with a fly ash percentage of 20% with respect to the total, without adding water because the starting clay had a an approximate water percentage of about 18%, in the first double-shaft mixer.

According to the present invention, the best ratio is 1:3, that is to say, 1 kg of phosphoric acid and 3 kg of hydrated sodium silicate for each 100 kg of fly ash, are added. Therefore, this means that for 1 T of mixture, 2 kg of phosphoric acid and 6 kg of hydrated sodium silicate need to be added.

Next, the phosphoric acid from the second double-shaft mixer was added to the mixture of clay and fly ash by means of pulverizing on the conveyor belt, which crosses three mills on its path towards the resting area of the material protected from atmospheric water.

The mixture was left to stand at least 24 hours. The hydrated sodium silicate was added by pulverizing on the conveyor belt, prior to reaching the extruder, on the following day.

The drying step usually lasts approximately 38 hours and the heating-firing cycle is usually carried out at 970 °C. In the case of this example, the drying lasted 24 hours regardless of the water content at the entrance to the kiln, and the heating-firing cycle was optimized in order not to exceed 840 °C.

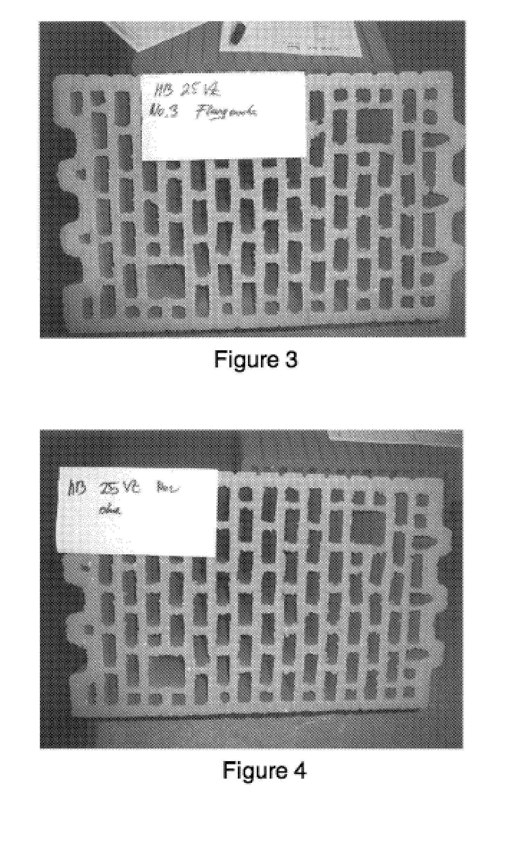

Figure 3 shows a ceramic material obtained according to the present invention in example 4, while figure 4 shows the appearance of a similar conventional ceramic material.

Tables 6 and 7 show the data corresponding to the materials of figures 3 and 4, respectively.

**Table 6. Properties of the ceramic material obtained according to the present invention (with additives; example 4)**

| Drying time | 24 hours |
|---|---|
| Gewicht | 18.3 |
| L= | 38.2 |
| B = | 25.05 |
| H= | 25.5 |
| Contraction | --- |
| Pressure | 1588.2 |
| Color | Luminous red |
| Srd | 1.546 g/cm³ |

**Table 7. Properties of a conventional ceramic material obtained according to the present invention (with no additives). PICHLER ZIEGELWERK standards.**

| Drying time | 24 hours |
|---|---|
| Gewicht | 17.66 |
| L= | 38.4 |
| B = | 24.9 |
| H= | 25.5 |
| Contraction | --- |
| Pressure | 1756.1 |
| Color | Red |
| Srd | 1.535 g/cm³ |

During the examination of the properties of the ceramic material obtained according to the present invention, we observe that the percentage of fly ash could even be increased to 50% by weight with respect to the total product and still maintain the physical properties of the product required according to the standard for a similar conventional ceramic material.

## Claims

1. **Method for obtaining a clay product from fly ash**, **characterized in that** it comprises at least the following steps:
- obtaining a mixture of clay and fly ash, with a percentage of ash equal to or lower than 50% by weight, or equal to or lower than 75% by volume of the end product; and
- adjusting the mixture of clay and fly ash by means of the incorporation of the following additives in two sub-steps:
○ first, adding phosphoric acid and grinding the mixture; and
○ second, adding hydrated sodium silicate (Na₂O)ₙ(SiO₂)ₘ(H₂O) and grinding the end mixture.

2. Method for obtaining a clay product according to claim 1, **characterized in that** the clay to fly ash ratio is 1:1.

3. Method for obtaining a clay product according to any one of the claims 1 or 2, **characterized in that** at least one minute elapses between the grinding of the mixture of clay and ash with phosphoric acid and the addition of the hydrated sodium silicate.

4. Method for obtaining a clay product according to any one of the claims 1 to 3, **characterized in that** water is added when the mixture of clay and fly ash presents an initial water content below 18%.

5. Method for obtaining a clay product according to claim 4, **characterized in that** the clay to water ratio is comprised between 100:40 and 100:70.

6. Method for obtaining a clay product according to any one of the claims 4 or 5, **characterized in that** the water is added directly to the mixture of clay and fly ash by means of the preparation of a suspension, prior to mixing the clay and the fly ash with the phosphoric acid.

7. Method for obtaining a clay product according to any one of the claims 4 or 5, **characterized in that** it comprises the following steps:
- preparing a first suspension comprising one part of water and the phosphoric acid,
- adding the suspension of phosphoric acid and water to the mixture of clay and fly ash, and grinding the mixture; and
- adding a second suspension comprising another part of water and the hydrated sodium silicate to said mixture, and grinding the end mixture.

8. Method for obtaining a clay product according to any one of the claims 1 to 3, **characterized in that** the phosphoric acid and the hydrated sodium silicate are added directly to the mixture of clay and fly ash when the clay presents an initial water content equal to or higher than 18%.

9. Method for obtaining a clay product according to claim 8, **characterized in that** the phosphoric acid and the hydrated sodium silicate are added directly to the mixture by pulverizing or sprinkling.

10. Method for obtaining a clay product according to any one of the previous claims, **characterized in that** the clay presents a carbonate content of at least 3%.

11. Method for obtaining a clay product according to any one of the previous claims, **characterized in that** the phosphoric acid is industrial grade, in a concentration of 75% by volume.

12. Method for obtaining a clay product according to any one of the previous claims, **characterized in that** the phosphoric acid is added to the mixture of clay and fly ash with a phosphoric acid to fly ash ratio of at least 1:50.

13. Method for obtaining a clay product according to any one of the previous claims, **characterized in that** the hydrated sodium silicate presents a SiO₂ to Na₂O ratio by weight of at least 3.00 w/w.

14. Method for obtaining a clay product according to any one of the previous claims, **characterized in that** the SiO₂ content in the hydrated sodium silicate is approximately 30% by weight.

15. Method for obtaining a clay product according to any one of the previous claims, **characterized in that** the phosphoric acid to hydrated sodium silicate ratio is comprised between 1:1 w/w and 1:5 w/w.

16. **Clay product** obtainable from a method according to any one of the claims 1 to 15.

17. **Use of a clay product** according to the previous claim for the manufacturing of ceramic materials.

18. **Use of fly ash as raw material to obtain clay products** in a method as the one described in any one of the claims 1 to 15.

19. **Method for manufacturing ceramic materials from the clay material obtainable by means of the method described in any one of the claims 1 to 15, characterized in that** it comprises at least the following steps:
- drying the clay product, and
- subjecting the clay product from the previous step to molding by extrusion and firing, the firing being carried out at a temperature below 900 °C.

20. Method for manufacturing ceramic materials according to claim 19, **characterized in that** the firing is carried out at a temperature equal to or lower than 850 °C.

21. Method for manufacturing ceramic materials according to any one of the claims 19 or 20, **characterized in that** after the drying, the clay product is conditioned to be subjected to molding and firing.

22. Method for manufacturing ceramic materials according to any one of the claims 20 or 21, **characterized in that** the dried clay product is conditioned for firing by crushing, grinding, or both consecutive actions.

23. Method for manufacturing ceramic materials according to any one of the claims 19 to 22, **characterized in that** the ceramic product is dried at a temperature comprised between 100 °C and 120 °C, including both limits, for a period of time comprised between 12 hours and 36 hours, including both limits.

24. Method for manufacturing ceramic materials according to any one of the claims 19 to 23, **characterized in that** the clay product is prepared immediately after the drying step.

25. Method for manufacturing ceramic materials according to claim 24, **characterized in that** the hydrated sodium silicate is added to the mixture of clay and ash with phosphoric acid and is then ground directly in the extruder machine where the clay product is to be molded.

26. **Ceramic material** obtainable from the method according to any one of the claims 19 to 25.

27. **Use of the ceramic material** according to claim 26 in the construction industry.
